# FASCICULE DE BREVET EUROPEEN

(11) **EP 1 365 203 B1**
(45) Date de publication et mention de la délivrance du brevet: **25.04.2007**
(21) Numéro de dépôt: 03101422.8
(22) Date de dépôt: 20.05.2003
(51) Int. Cl.: F28D 9/00, B64D 13/00, B64D 33/02, F28F 27/02

(54) **Echangeur pour circuit de conditionnement d'air d'aéronef et ensemble de propulsion integrant un tel échangeur**
Wärmetauscher für eine Flugzeugklimaanlage und Antriebssystem mit einem solchen Wärmetauscher
Heat exchanger for aircraft air conditioning system and propulsion system including same

(30) Priorité: 22.05.2002 FR 0206218
(43) Date de publication de la demande: 26.11.2003
(73) Titulaire: AIRBUS France, 31060 Toulouse (FR)
(72) Inventeur: Marche, Hervé, 31120, ROQUETTES (FR)
(74) Mandataire: Poulin, Gérard

(56) Documents cités:
- EP-A- 0 964 219
- FR-A- 882 208
- FR-A- 2 485 473
- FR-A- 2 563 491
- US-A- 2 816 740
- US-A- 3 311 166
- US-A- 4 461 344
- US-A- 4 971 137
- US-A- 5 482 229
- PATENT ABSTRACTS OF JAPAN vol. 014, no. 075 (M-0934), 13 février 1990 (1990-02-13) & JP 01 293298 A (MITSUBISHI HEAVY IND LTD), 27 novembre 1989 (1989-11-27)

## Description

### DOMAINE TECHNIQUE

L'invention concerne principalement un échangeur thermique, destiné à assurer le refroidissement de l'air admis dans un circuit de conditionnement d'air d'une cabine d'aéronef.

Plus précisément, l'invention concerne un échangeur thermique intégré dans un mât par lequel un turboréacteur d'aéronef est suspendu à la voilure.

L'invention concerne également un ensemble de propulsion d'aéronef, comprenant un turboréacteur, un mât et un échangeur intégré dans le mât.

L'invention s'applique à tout type d'aéronef et notamment aux avions de ligne destinés au transport de passagers.

### ETAT DE LA TECHNIQUE ANTERIEURE

Sur les aéronefs existants, il est d'usage de prélever de l'air chaud dans les turboréacteurs afin de l'injecter dans le circuit de conditionnement d'air de la cabine pressurisée dans laquelle se trouvent l'équipage et les passagers.

Etant donné que la température de l'air prélevé dans le réacteur est généralement d'environ 400°C alors que la température maximale de l'air circulant dans le circuit de conditionnement d'air ne doit pas excéder environ 200°C, on interpose habituellement un échangeur thermique entre le réacteur et le circuit de conditionnement d'air. Cet échangeur assure le refroidissement de l'air à haute température en provenance du réacteur grâce à un échange thermique entre cet air à haute température et de l'air plus froid (à environ 100°C) prélevé dans le canal de soufflante du turboréacteur.

Etant donné que les échanges thermiques qui ont lieu à l'intérieur de l'échangeur concernent deux flux d'air issus du réacteur, il est d'usage de placer l'échangeur à proximité immédiate de celui-ci. Plus précisément, l'échangeur est habituellement intégré à la structure du mât par lequel le réacteur est suspendu sous la voilure de l'aéronef.

Une solution connue consiste à monter l'échangeur au-dessus de la partie avant du caisson formant la structure rigide du mât et à l'intérieur du carénage recouvrant ledit caisson.

Dans ce cas, l'échangeur comprend habituellement des plaques creuses verticales entre lesquelles l'air relativement froid en provenance du canal de soufflante circule de bas en haut, pour être rejeté à l'extérieur, dans l'atmosphère, par des ouïes formées dans le carénage supérieur du mât. L'air relativement chaud en provenance de la partie centrale du moteur circule d'avant en arrière à l'intérieur des plaques creuses verticales, pour y être refroidi avant d'être canalisé vers le circuit de conditionnement d'air. L'air relativement froid en provenance du canal de soufflante est admis dans l'échange par une tubulure munie d'une vanne permettant de réguler le débit. Cette régulation du débit de l'air relativement froid à l'intérieur de l'échangeur permet de contrôler la température de l'air dans le circuit de conditionnement d'air.

Les échangeurs de ce type présentent différents inconvénients.

En premier lieu, leur implantation au-dessus de la partie avant du caisson rigide du mât créerait un renflement dans la partie supérieure avant du carénage, si ce type d'échangeur était utilisé sur un aéronef équipé de réacteurs de plus grand diamètre que ceux qui l'équipaient lors de sa conception. L'utilisation de réacteurs de plus grand diamètre peut notamment être motivé par un désir de diminuer le niveau sonore et/ou d'accroître les performances de l'aéronef, et en particulier sa vitesse. Le renflement ainsi produit serait préjudiciable à l'écoulement aérodynamique de l'air dans la zone située entre la voilure et le réacteur. Il n'est donc pas acceptable.

Un autre inconvénient des échangeurs existants concerne le rejet à l'atmosphère de l'air relativement froid utilisé pour refroidir l'air qui est injecté dans le circuit de conditionnement d'air. Ce rejet à l'atmosphère est pratiquement imposé par la circulation de bas en haut de l'air relativement froid à l'intérieur de l'échangeur, alors que la température relativement modérée de l'air ainsi rejeté permettrait d'envisager son utilisation pour refroidir certaines parties chaudes du moteur.

Le document US-A-4971137 divulgue un échangeur de refroidissement d'air selon le préambule de la revendication 1.

### EXPOSÉ DE L'INVENTION

L'invention a principalement pour but la réalisation d'un échangeur de refroidissement de l'air admis dans un circuit de conditionnement d'air d'une cabine d'aéronef, ledit échangeur étant conçu de façon à pouvoir être installé à l'intérieur même du caisson du mât, de façon à éviter tout risque de création d'un renflement lorsqu'il est utilisé sur un aéronef équipé de réacteurs de plus grand diamètre.

L'invention a aussi pour but la réalisation d'un échangeur de refroidissement de l'air admis dans un circuit de conditionnement d'air d'une cabine d'aéronef, dont la conception originale lui permet d'utiliser l'air relativement froid sortant de l'échangeur pour refroidir des parties chaudes du moteur.

Conformément à l'invention, ces buts sont atteints, au moins en partie, grâce à un échangeur de refroidissement d'air selon la revendication 1.

Ainsi, selon l'invention, l'air utilisé pour le refroidissement de l'air injecté dans le circuit de conditionnement d'air de l'aéronef circule transversalement dans l'échangeur, entre ses deux faces latérales. Il devient donc possible de placer l'échangeur à l'intérieur même du caisson rigide du mât, ce qui évite la formation d'un renflement dans l'hypothèse où on utiliserait un réacteur de plus grand diamètre que celui qui équipait initialement l'aéronef, lors de sa conception. D'autre part, cet agencement permet d'utiliser l'air de refroidissement rejeté par l'échangeur pour refroidir certaines parties chaudes du moteur.

Selon un mode de réalisation préféré de l'invention, les guides d'air relativement froid sont des plaques creuses superposées, sensiblement horizontales.

Dans ce cas, les orifices d'entrée des plaques creuses sont placés, de préférence, alternativement à l'avant de l'une et de l'autre desdites faces latérales opposées. On réalise ainsi une circulation croisée de l'air relativement froid sur toute la hauteur de l'échangeur.

L'échangeur comprend aussi, avantageusement, une deuxième porte de réglage de débit, placée sur la partie arrière de chaque face latérale sur laquelle débouchent les orifices de sortie des plaques creuses.

L'invention a aussi pour objet un ensemble de propulsion d'aéronef, comprenant un turboréacteur ayant un moteur central et une nacelle délimitant entre eux un canal de soufflante, un mât par lequel le réacteur est apte à être suspendu à un élément de voilure de l'aéronef, et un échangeur de refroidissement d'air, pour un circuit de conditionnement d'air d'une cabine de l'aéronef, dans lequel ledit échangeur est réalisé de la manière définie ci-dessus et placé dans le mât de telle sorte que les orifices de sortie des guides d'air débouchent dans le canal de soufflante du turboréacteur.

### BRÈVE DESCRIPTION DES DESSINS

On décrira à présent, à titre d'exemple illustratif et non limitatif, un mode de réalisation préféré de l'invention, en se référant aux dessins annexés, dans lesquels :
- la figure 1 est une vue en perspective qui représente un échangeur de refroidissement d'air conforme à l'invention, sur laquelle les portes de réglage de débit sont volontairement omises ;
- la figure 2 est une vue comparable à la figure 1, sur laquelle les portes de réglage de débit sont présentes et illustrées dans leur état ouvert ;
- la figure 3 est une vue en coupe transversale qui représente schématiquement un ensemble comprenant un turboréacteur d'aéronef, le mât par lequel celui-ci est suspendu à la voilure et un échangeur tel qu'illustré aux figures 1 et 2 intégré dans le mât ; et
- la figure 4 est une vue en coupe longitudinale schématique de l'ensemble illustré sur la figure 3.

### EXPOSE DETAILLE D'UN MODE DE REALISATION PREFERE

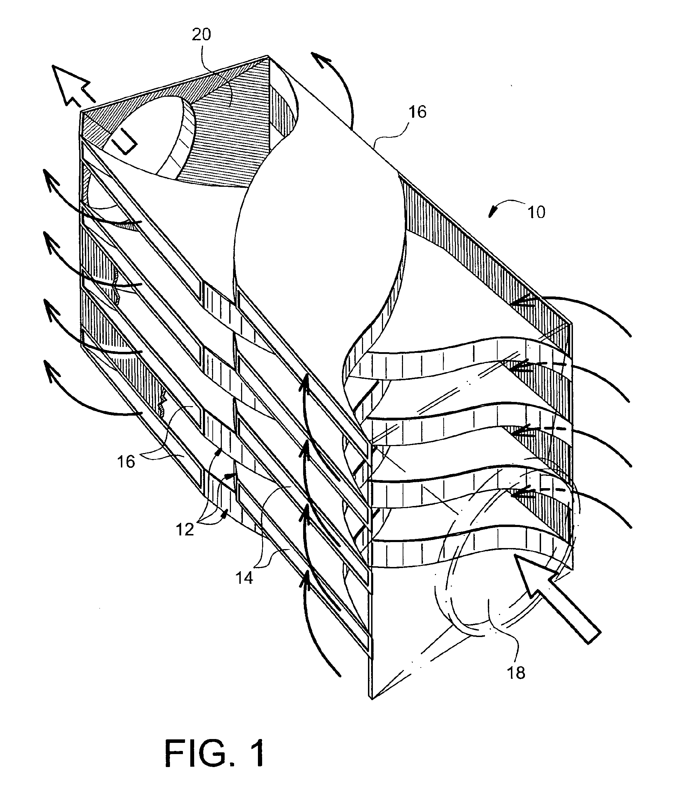

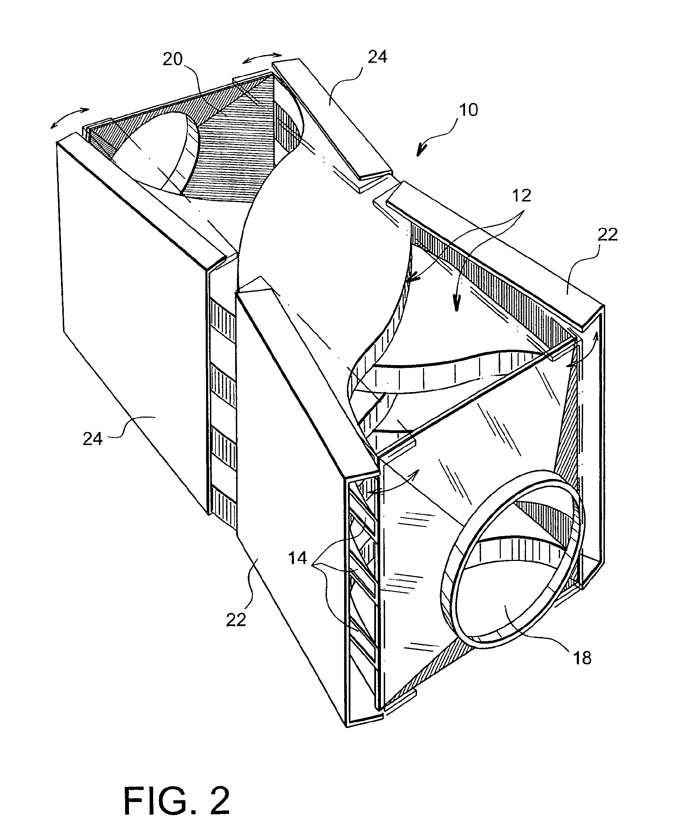

Les figures 1 et 2 représentent un mode de réalisation préféré d'un échangeur 10 de refroidissement d'air conforme à l'invention. Plus précisément, la figure 1 représente l'échangeur 10 dépourvu de ses portes de réglage de débit et la figure 2 représente l'échange 10 complet, c'est-à-dire équipé de ses portes de réglage de débit. L'échangeur 10 de réglage de débit conforme à l'invention est destiné à assurer le refroidissement de l'air admis dans un circuit de conditionnement de l'air contenu dans la cabine d'un aéronef.

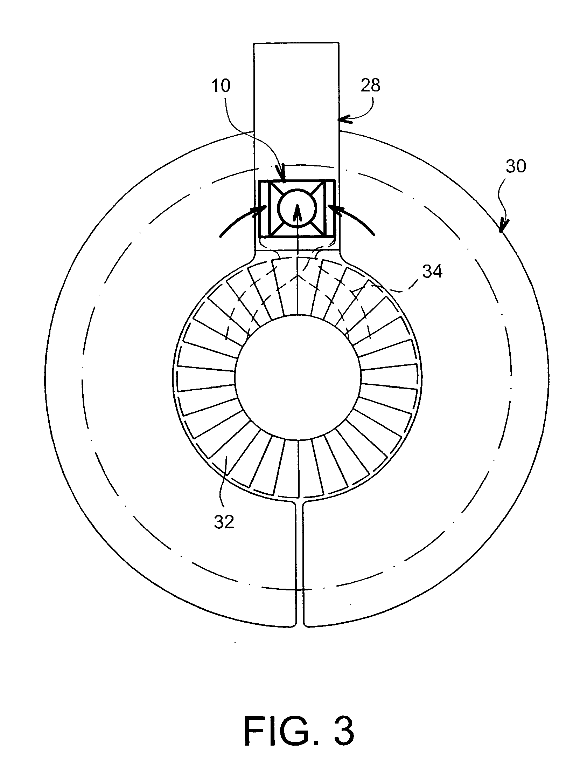

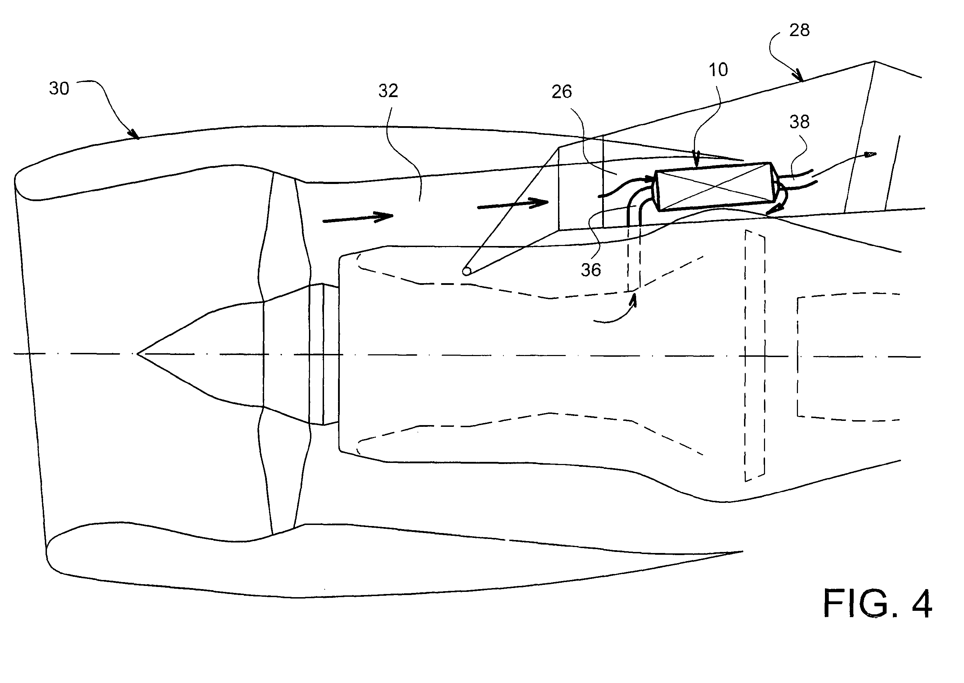

Comme l'illustre la figure 1, l'échange 10 présente de manière générale la forme d'un parallélépipède rectangle et présente deux faces latérales sensiblement verticales, des faces inférieure et supérieure sensiblement horizontales, ainsi que des faces avant et arrière sensiblement verticales. Les termes "faces latérales", "faces inférieure et supérieure" et "faces avant et arrière" font référence à l'orientation de l'échangeur lorsqu'il est placé à l'intérieur du mât d'un aéronef, comme on le décrira plus en détail par la suite en se référant aux figures 3 et 4.

Dans le mode de réalisation représenté, l'échangeur 10 comprend une pluralité de plaques creuses 12 superposées, sensiblement planes et horizontales. Les plaques creuses 12 forment des guides d'air relativement froid dans lesquels circule de l'air de refroidissement prélevé dans le canal de soufflante du turboréacteur, comme on le comprendra mieux par la suite.

Le guide d'air formé par chacune des plaques creuses 12 comprend un orifice d'entrée 14 et un orifice de sortie 16. L'orifice d'entrée 14 débouche sur l'une des deux faces latérales opposées de l'échangeur, sur une partie avant de ladite face, et l'orifice de sortie 16 débouche sur l'autre desdites faces latérales opposées de l'échangeur, sur une partie arrière de ladite face, comme le montre en particulier la figure 1.

De façon plus précise, les orifices d'entrée 14 des plaques creuses 12 débouchent alternativement dans la partie avant de l'une et de l'autre des faces latérales opposées de l'échangeur 10. Par conséquent, les orifices de sortie 16 des plaques creuses 12 débouchent alternativement dans la partie arrière de l'une et de l'autre des faces latérales opposées de l'échangeur 10.

Les plaques creuses 12, sensiblement horizontales, sont assemblées les unes aux autres par l'intermédiaire d'une ossature rigide (non représentée) qui délimite entre lesdites plaques 12 des espaces formant des passages pour l'air relativement chaud destiné au circuit de conditionnement d'air de l'aéronef.

Les passages formés entre les plaques creuses 12 débouchent respectivement sur la face avant et sur la face arrière de l'échangeur, dans un collecteur d'entrée 18 et dans un collecteur de sortie 20. Des cloisons (non représentées) relient entre elles les plaques creuses 12 sur les deux faces latérales de l'échangeur, de façon à canaliser l'air relativement chaud qui s'écoule dans lesdits passages entre les collecteurs 18 et 20.

Dans le mode de réalisation représenté sur la figure 2, l'échangeur 10 comprend de plus deux portes avant 22 de réglage de débit et deux portes arrière 24 de réglage de débit.

Les portes avant 22 recouvrent les parties avant des faces latérales de l'échangeur 10, de façon à se trouver en face des orifices d'entrée 14 des plaques creuses superposées 12. Plus précisément, les portes avant 22 sont articulées sur les faces latérales de l'échangeur 10 par des axes sensiblement verticaux situés dans des parties centrales desdites faces. Les portes avant 22 peuvent ainsi occuper différentes positions intermédiaires entre une position totalement fermée et une position totalement ouverte, illustrée sur la figure 2.

Les portes arrière 24 recouvrent les parties arrière des faces latérales de l'échangeur 10, de façon à se trouver en face des orifices de sortie 16 des plaques creuses superposées 12. Plus précisément, les portes arrière 24 sont articulées sur les faces latérales de l'échangeur 10 par des axes sensiblement verticaux situés dans des parties centrales desdites faces, à proximité des axes d'articulation des portes avant 22. Comme les portes avant 22, les portes arrière 24 peuvent ainsi occuper différentes positions intermédiaires entre une position totalement fermée et une position totalement ouverte, illustrée sur la figure 2.

Les mouvements des portes avant 22 et arrière 24 sont commandés par des actionneurs (non représentés) tels que des vérins, en réponse à des signaux de commande d'ouverture ou de fermeture délivrés par une unité de commande (non représenté). Celle-ci est elle-même sensible à des signaux fournis, par exemple, par des capteurs placés dans le collecteur de sortie 20 de l'air relativement chaud qui alimente le circuit de conditionnement d'air.

Ainsi, la température de l'air relativement chaud, sortant de l'échangeur par le collecteur de sortie 20, peut être régulée en agissant sur les portes 22 et 24. On peut ainsi maintenir la température de l'air dans le circuit de conditionnement d'air de la cabine de l'aéronef à une valeur n'excédant pas environ 200°C, en utilisant de l'air chaud à environ 400°C en provenance du moteur, refroidi par de l'air froid à environ 100°C prélevé dans le carter de soufflante.

Comme on l'a représenté sur les figures 3 et 4, l'échangeur 10 est placé avantageusement à l'intérieur du caisson rigide 26 formant l'ossature du mât 28 par lequel un turboréacteur 30 est suspendu à la voilure d'un aéronef.

Plus précisément, on voit sur la figure 4 que l'échangeur 10 est monté dans le mât 28 de façon à se trouver dans la partie arrière du canal de soufflante 32 du turboréacteur 30, au niveau de l'inverseur de poussée de celui-ci.

Cet agencement de l'échangeur 10 permet de placer les orifices d'entrée 14 des plaques creuses 12 directement dans le flux d'air relativement froid qui circule à l'intérieur du canal de soufflante 32 du turboréacteur 30. Le flux d'air relativement froid qui est évacué par les orifices de sortie 16 des plaques creuses 12 est, selon le cas, soit directement évacué dans le canal de soufflante 32, soit repris par des canalisations 34 qui l'acheminent jusqu'à des parties centrales chaudes du moteur, afin de les refroidir.

Par ailleurs, le collecteur d'entrée 18 de l'air relativement chaud communique avec une zone relativement chaude de la partie centrale du moteur par une tubulure 36, de façon à être alimenté en air relativement chaud, à une température généralement voisine de 400°C. L'air refroidi qui quitte l'échangeur par le collecteur de sortie 20 est acheminé à son tour vers le circuit de conditionnement d'air de l'aéronef par une tubulure 38.

La description qui précède montre que l'utilisation d'un échangeur conforme à l'invention permet de placer celui-ci à l'intérieur même du caisson rigide du mât par lequel le turboréacteur est suspendu à la voilure de l'aéronef. On évite ainsi la formation d'un renflement à l'avant de la partie supérieure du carénage du mât. Par conséquent, l'écoulement de l'air entre le turboréacteur et la voilure n'est pas perturbé par la présence de l'échangeur, même lorsqu'on équipe l'aéronef d'un réacteur de plus grand diamètre que ceux qu'il était destiné à recevoir, lors de sa conception.

La conception originale de l'échangeur conforme à l'invention permet de plus de ne pas rejeter à l'atmosphère l'air relativement froid ayant servi à refroidir l'air injecté dans le circuit de conditionnement d'air. Ainsi, comme on l'a décrit précédemment, cet air relativement froid peut être soit réinjecté dans le canal de soufflante, soit utilisé pour refroidir certaines parties du moteur central.

Bien entendu, l'invention n'est pas limitée au mode de réalisation qui vient d'être décrit à titre d'exemple. La forme et l'agencement des guides d'air ainsi que la forme et l'agencement des portes de réglage de débit peuvent notamment être différents de ceux qui ont été décrits. En outre, les portes de réglage de débit situées en face des orifices de sortie de l'air relativement froid peuvent éventuellement être supprimées sans sortir du cadre de l'invention. Enfin, au lieu d'être logé à l'intérieur du caisson du mât, comme dans le mode de réalisation décrit, l'échangeur selon l'invention peut aussi être installé en dehors de la structure du mât et notamment en dessous de celui-ci, sans sortir du cadre de l'invention.

## Revendications

1. Echangeur (10) de refroidissement d'air, pour un circuit de conditionnement d'air d'aéronef, ledit échangeur (10) comprenant un collecteur d'entrée (18) et un collecteur de sortie (20) d'air relativement chaud, placés respectivement à l'avant et à l'arrière de l'échangeur, et des guides (12) d'air relativement froid, ayant chacun un orifice d'entrée (14) et un orifice de sortie (16), lesdits guides (12) délimitant entre eux des passages reliant le collecteur d'entrée (18) et le collecteur de sortie (20), les orifices d'entrée (14) et de sortie (16) de chaque guide (12) d'air relativement froid débouchant sur deux faces latérales opposées de l'échangeur (10), l'échangeur comprenant de plus une première porte (22) de réglage de débit, placée sur la face latérale sur laquelle débouchent les orifices d'entrée (14) des guides (12), **caractérisé en ce que** chaque face latérale de l'échangeur porte sur sa partie avant les orifices d'entrée (14) et sur sa partie arrière les orifices de sortie (16), les orifices d'entrée de l'une des faces étant reliées aux orifices de sortie de l'autre face, et **en ce que** la première porte de reglage de débit est placée sur la partie avant de chacune des faces latérales sur lesquelles débouchent les orifices d'entrée.

2. Echangeur selon la revendication 1, dans, lequel les guides d'air relativement froid sont des plaques creuses (12) superposées, sensiblement horizontales.

3. Echangeur selon la revendication 2, dans lequel les orifices d'entrée (14) des plaques creuses (12) sont placés alternativement à l'avant de l'une et de l'autre desdites faces latérales opposées.

4. Echangeur selon l'une quelconque des revendications 1 à 3, comprenant de plus une deuxième porte (24) de réglage de débit, placée sur la partie arrière de chaque face latérale sur laquelle débouchent les orifices de sortie (16) des plaques creuses (12).

5. Ensemble de propulsion d'aéronef, comprenant un turboréacteur (30) ayant un moteur central et une nacelle délimitant entre eux un canal de soufflante (32), un mât (28) par lequel le turboréacteur (30) est apte à être suspendu à un élément de voilure de l'aéronef, et un échangeur (10) de refroidissement d'air, pour un circuit de conditionnement d'air d'une cabine de l'aéronef, dans lequel ledit échangeur (10) est réalisé selon l'une quelconque des revendications précédentes et placé dans le mât (28) de telle sorte que les orifices de sortie (16) des guides d'air (12) débouchent dans le canal de soufflante (32) du turboréacteur (30).

## Claims

1. Exchanger (10) for cooling air, for an aircraft air conditioning circuit, said exchanger (10) comprising an inlet manifold (18) and an exhaust manifold (20) of relatively warm air, placed respectively in front of and behind the exchanger, and guides (12) for relatively cold air, each having an inlet port (14) and an outlet port (16), said guides (12) delimiting between them passages connecting the inlet manifold (18) and the exhaust manifold (20), the inlet ports (14) and outlet ports (16) of each guide (12) of relatively cold air terminating on two opposite lateral faces of the exchanger (10), the exchanger further comprising a first flow control door (22), placed on the lateral face on which the inlet ports (14) of the guides (12) terminate, **characterized in that** each lateral face of the exchanger carries on its front part the inlet ports (14) and on its rear part the outlet ports (16), the inlet ports of one of the faces being connected to the outlet ports of the other face, and **in that** the first flow control door is placed on the front part of each of the lateral faces onto which issue the inlet ports.

2. Exchanger as claimed in claim 1, in which the guides for relatively cold air are substantially horizontal superposed hollow plates (12).

3. Exchanger as claimed in claim 2, in which the inlet ports (14) of the hollow plates (12) are placed alternatively in front of one and the other of said opposite lateral faces.

4. Exchanger as claimed in any one of claims 1 to 3, further comprising a second flow control door (24), placed on the rear part of each lateral face on which the outlet ports (16) of the hollow plates (12) terminate.

5. Aircraft propulsion assembly comprising a turboreactor (30) having a central engine and an engine nacelle delimiting between them a fan duct (32), a strut (28) by which the turboreactor (30) is designed to be suspended from a wing unit element of the aircraft, and an exchanger (10) for cooling air, for an air conditioning circuit of an aircraft cabin, in which said exchanger (10) is realized as claimed in any one of the preceding claims and placed in the strut (28) such that the outlet ports (16) of the air guides (12) terminate in the fan duct (32) of the turboreactor (30).

## Patentansprüche

1. Wärmetauscher (10) zur Kühlung von Luft für einen Luftkonditionierungs- bzw. Klimaanlagen-Kreislauf eines Luftfahrzeugs, wobei der Wärmetauscher (10) einen Eingangskollektor (18) und einen Ausgangskollektor (20) von relativ warmer Luft aufweist, die jeweils vor und hinter dem Wärmetauscher angeordnet sind, sowie Leitelemente (12) von relativ kalter Luft, die jeweils eine Eingangsöffnung (14) und eine Ausgangsöffnung (16) aufweisen, wobei die Leitelemente (12) untereinander Durchgänge festlegen, welche den Eingangskollektor (18) und den Ausgangskollektor (20) verbinden, wobei die Eingangsöffnung (14) und die Ausgangsöffnung (16) jedes Leitelements (12) relativ kalter Luft an zwei lateral gegenüberliegenden Seiten des Wärmetauschers (10) münden, und wobei der Wärmetauscher außerdem eine erste Tür (22) zur Durchsatzregelung aufweist, die an einer Seitenfläche angeordnet ist, an der die Eingangsöffnungen (14) der Leitelemente (12) münden,
**dadurch gekennzeichnet, dass** jede Seitenfläche des Wärmetauschers an ihrem vorderen Abschnitt die Eingangsöffnungen (14) und an ihrem hinteren Abschnitt die Ausgangsöffnungen (16) trägt, wobei die Eingangsöffnungen einer der Seiten mit den Ausgangsöffnungen der anderen Seite verbunden sind, und dass die erste Tür zur Durchsatzregelung an dem vorderen Abschnitt jeder der Seitenflächen angeordnet ist, an denen die Eingangsöffnungen münden.

2. Wärmetauscher nach Anspruch 1, wobei die Leitelemente von relativ kalter Luft übereinandergelagerte, im wesentlichen horizontale hohle Platten (12) sind.

3. Wärmetauscher nach Anspruch 2, wobei die Eingangsöffnungen (14) der hohlen Platten (12) alternierend vor der einen und der anderen der gegenüberliegenden Seitenflächen angeordnet sind.

4. Wärmetauscher nach einem der Ansprüche 1 bis 3, außerdem eine zweite Tür zur Durchsatzregelung (24) umfassend, die an einem hinteren Abschnitt jeder Seitenfläche angeordnet ist, an der die Ausgangsöffnungen (16) der hohlen Platten (12) münden.

5. Antriebseinheit eines Luftfahrzeugs mit einem Strahltriebwerk (30), umfassend ein zentrales Triebwerk sowie eine Triebwerkverkleidung, die untereinander einen Gebläsekanal (32) festlegen, einen Mast (28), durch den das Strahltriebwerk (30) an einem Tragwerkelement des Luftfahrzeugs aufgehängt werden kann, und einen Wärmetauscher (10) zur Kühlung von Luft für einen Luftkonditionierungs- bzw. Klimaanlagen-Kreislauf einer Kabine des Luftfahrzeugs, wobei der Wärmetauscher (10) gemäß einem der vorangehenden Ansprüche hergestellt ist, und in dem Mast (28) derart angeordnet ist, dass die Ausgangsöffnungen (16) der Luftleitelemente (12) in den Gebläsekanal (32) des Strahltriebwerks (30) münden.
